# EUROPÄISCHE PATENTANMELDUNG

(11) **EP 3 831 579 A1**
(43) Veröffentlichungstag der Anmeldung: **09.06.2021**
(21) Anmeldenummer: 20210089.7
(22) Anmeldetag: 26.11.2020
(51) Int. Cl.: B29C 65/02, B29C 65/78, B65B 7/16, B65B 9/04, B65B 51/14

(54) **TIEFZIEHVERPACKUNGSMASCHINE UND VERFAHREN ZUM BETREIBEN EINER TIEFZIEHVERPACKUNGSMASCHINE**

(30) Priorität: 03.12.2019 DE 102019218756
(71) Anmelder: MULTIVAC Sepp Haggenmüller SE & Co. KG, 87787 Wolfertschwenden (DE)
(72) Erfinder: BRAUN, Jochen, 87746 Erkheim (DE); STREITENBERGER, Andreas, 87452 Altusried (DE)
(74) Vertreter: Grünecker Patent- und Rechtsanwälte PartG mbB

(57) **Zusammenfassung**

Die Erfindung bezieht sich auf eine Tiefziehverpackungsmaschine (1) und auf ein Verfahren zum Betreiben einer solchen Tiefziehverpackungsmaschine (1), bei denen im Unterteil (24) der Siegelstation (3) eine Siegelbrille (28) vorgesehen ist, die schwimmend im Unterteil (24) gelagert ist und sich infolgedessen während des Schließens der Siegelstation (3) relativ zum Unterteil (24) verlagern kann.

## Beschreibung

Die Erfindung bezieht sich auf ein Verfahren zum Betreiben einer Tiefziehverpackungsmaschine gemäß dem Oberbegriff des Anspruchs 1 und auf eine Tiefziehverpackungsmaschine selbst.

Ein entsprechendes Verfahren zum Betreiben einer Tiefziehverpackungsmaschine ist beispielsweise aus der EP 2 740 679 A1 bekannt. Diese herkömmliche Tiefziehverpackungsmaschine hat das Ziel, den Materialverbrauch der Verpackungsmaschine zu reduzieren, indem Toleranzen verringert werden. Zu diesem Zweck ist innerhalb einer Vorschublänge stromaufwärts der Siegelstation ein Messsystem vorgesehen, das die Lage der Mulden in der Unterfolie erfasst. Im nachfolgenden Arbeitstakt werden die entsprechenden Mulden in die Siegelstation transportiert und diese Siegelstation wird entsprechend der ermittelten Lage der Mulden präzise relativ zu der Position der Mulden positioniert. Prinzipiell kann dies erfordern, dass bei jedem Arbeitstakt der taktweise betriebenen Verpackungsmaschine die gesamte Siegelstation aktiv positioniert wird.

Die Aufgabe der vorliegenden Erfindung ist es, ein Verfahren und eine Tiefziehverpackungsmaschine der eingangs genannten Art dahingehend zu verbessern, dass der Materialverbrauch einer Verpackungsmaschine mit konstruktiv möglichst einfachen Mitteln verringert wird.

Diese Aufgabe wird gelöst durch ein Verfahren mit den Merkmalen des Anspruchs 1 bzw. durch eine Tiefziehverpackungsmaschine mit den Merkmalen des Anspruchs 6. Vorteilhafte Weiterbildungen der Erfindung sind jeweils in den Unteransprüchen angegeben.

Das erfindungsgemäße Verfahren dient zum Betreiben einer Tiefziehverpackungsmaschine, die eine Formstation zum Tiefziehen von Mulden in eine Unterfolie sowie eine Siegelstation zum Versiegeln der Mulden mit einer Oberfolie aufweist, wobei die Siegelstation typischerweise stromabwärts der Formstation angeordnet werden wird. Die Siegelstation weist ihrerseits ein Oberteil und ein Unterteil auf, von denen mindestens eines relativ zum anderen zwischen einer geöffneten Stellung und einer geschlossenen Stellung bewegbar ist. Diese Bewegung findet statt in einer sogenannten Schließrichtung, die häufig vertikal sein wird. Oft wird dabei der sogenannte Hub (d. h. der Bewegungsweg) des Unterteils größer sein als derjenige des Oberteils. Bei der Erfindung umfasst die Siegelstation ferner innerhalb des Unterteils eine Siegelbrille mit einer oder mehreren Öffnungen zur Aufnahme einer entsprechenden Anzahl von einer oder mehreren Mulden der Unterfolie.

Im erfindungsgemäßen Verfahren werden die Mulden in der Formstation tiefgezogen und anschließend in einer Transportrichtung von der Formstation zur Siegelstation transportiert. Dieser Transport kann intermittierend (d. h. taktweise) erfolgen. Nachdem eine Mulde oder ein sogenanntes Format von mehreren Mulden in die Siegelstation eingebracht wurde, wird die Siegelstation geschlossen, indem Oberteil und/oder Unterteil der Siegelstation in der besagten Schließrichtung von der geöffneten zur geschlossenen Stellung gebracht werden.

Die Erfindung zeichnet sich dadurch aus, dass die Siegelbrille während des Schließens der Siegelstation durch Verlagern relativ zum Unterteil in Transportrichtung und/oder in einer sowohl senkrecht zur Transportrichtung als auch senkrecht zur Schließrichtung stehenden Richtung an der oder den in die Siegelstation eingebrachten Mulden ausrichtet. Mit anderen Worten: Während sich das Unterteil der Siegelstation in Schließrichtung bewegt, bewegt sich die Siegelbrille relativ zum Unterteil in Transportrichtung und/oder quer zur Transportrichtung, so dass die Siegelbrille anschließend präzise relativ zu den Mulden positioniert ist. Auf diese Weise kann der Materialverbrauch der Tiefziehverpackungsmaschine gesenkt werden, da wegen der präzise relativ zu den Mulden ausgerichteten Siegelbrille mit geringeren Siegelnahtbreiten und/oder geringeren Abständen der Siegelung zu den jeweiligen Verpackungsmulden als in herkömmlichen Verpackungsmaschinen gearbeitet werden kann.

Besonders vorteilhaft ist es, wenn sich die Siegelbrille gewissermaßen passiv relativ zum Unterteil verlagert, d. h. ohne einen aktiven Antrieb, im Gegensatz beispielsweise zur motorischen Verstellung der Siegelstation gemäß EP 2 740 679 A1. Bei der Erfindung kann dies dadurch geschehen, dass sich die Siegelbrille durch Kontakt eines Rands ihrer Öffnung mit der wenigstens einen Mulde ausrichtet. Dazu wäre es vorteilhaft, wenn die Widerstandskraft der Unterfolie gegen eine Verformung der Mulde mindestens so hoch oder sogar höher ist als die Kraft, die zum Verlagern der Siegelbrille erforderlich ist, beispielsweise um Reibungskräfte zu überwinden.

Eine Möglichkeit hierfür besteht in der Verwendung einer Unterfolie mit einer Stärke von mindestens 150 µm, vorzugsweise sogar wenigstens 300 µm oder 400 µm. Solche Folien werden oft als Hartfolie bezeichnet.

Als zweckmäßig erweist es sich, wenn die Siegelbrille und das Unterteil der Siegelstation nach zumindest einem Teil der Schließbewegung der Siegelstation auf Block liegen. Zu diesem Zeitpunkt sind die für eine weitere Verlagerung der Siegelbrille erforderlichen Kräfte deutlich höher als zu Beginn der Schließbewegung. Dies ermöglicht eine Kontrolle der Position der Siegelbrille.

Vorzugsweise behält die Siegelbrille nach einem Teil der Schließbewegung der Siegelstation relativ zum Unterteil ihre Position in Transportrichtung der Unterfolie und/oder in Querrichtung zur Transportrichtung bei. Wie bereits erwähnt, kann dies beispielsweise dadurch erreicht werden, dass die Siegelbrille und das Unterteil der Siegelstation nach der Schließbewegung oder zumindest einem Teil der Schließbewegung auf Block liegen.

Die Erfindung bezieht sich auch auf eine Tiefziehverpackungsmaschine, die eine Formstation zum Tiefziehen von Mulden in eine Unterfolie sowie eine Siegelstation zum Versiegeln der Mulden mit einer Oberfolie aufweist, wobei die Siegelstation ein Oberteil und ein Unterteil umfasst, von denen wenigstens eines relativ zum anderen zwischen einer geöffneten Stellung und einer geschlossenen Stellung bewegbar ist. Die Siegelstation umfasst ferner innerhalb des Unterteils eine Siegelbrille mit einer oder mehreren Öffnungen zur Aufnahme einer entsprechenden Anzahl von Mulden. Diese Tiefziehverpackungsmaschine könnte zum Durchführen eines Verfahrens nach einer der vorstehend erläuterten Varianten konfiguriert sein.

Die erfindungsgemäße Tiefziehverpackungsmaschine zeichnet sich dadurch aus, dass die Siegelbrille innerhalb des Unterteils der Siegelstation schwimmend gelagert ist und zumindest zeitweise während des Schließens der Siegelstation relativ zum Unterteil verlagerbar ist. Mit dieser schwimmenden Lagerung wird ermöglicht, dass sich die Siegelbrille während des Schließens der Siegelstation positionsgenau relativ zu der oder den Mulden in der Unterfolie ausrichtet, was wiederum die vorstehend erläuterten Vorteile hinsichtlich eines verringerten Materialverbrauchs der Verpackungsmaschine bietet.

Günstig ist es in dieser Hinsicht, wenn die Siegelbrille relativ zum Unterteil der Siegelstation in einer oder zwei Raumrichtungen verlagerbar ist, die jeweils senkrecht zu einer Schließrichtung der Siegelstation oder konkret horizontal ausgerichtet sind. Bei diesen beiden Richtungen kann es sich insbesondere um eine Transportrichtung der Unterfolie in der Tiefziehverpackungsmaschine und um eine Richtung quer zu dieser Transportrichtung handeln. Mit anderen Worten ist die Siegelbrille beispielsweise in einem oder zwei Freiheitsgraden horizontal beweglich, während die Siegelstation eine Schließbewegung vollzieht, beispielsweise durch Anheben des Unterteils.

In einer vorteilhaften Variante liegt die Siegelbrille auf mindestens einem in Unterteil der Siegelstation angeordneten oder gelagerten Gleitstein auf. Der Begriff "Gleitstein" ist dabei nicht einschränkend auf ein Steinmaterial zu verstehen, sondern bezeichnet jegliches Element, auf dem die Siegelbrille gleiten kann. In dieser Hinsicht kann der Gleitstein auch eine Gleitplatte sein. Der Gleitstein kann eine glatte, ebene, gekrümmte und/oder strukturierte Oberfläche aufweisen. Vorzugsweise sind zwei, drei, vier oder mehr Gleitsteine vorgesehen, um ein Verkannten der Siegelbrille im Unterteil zu verhindern.

Als vorteilhaft hat es sich erwiesen, wenn der mindestens eine Gleitstein oder die mehreren Gleitsteine federnd im Unterteil der Siegelstation gelagert ist/sind. Dies trägt dazu bei, die Reibungskräfte zwischen Siegelbrille und Gleitstein zu verringern.

Vorteilhaft ist es auch, wenn der mindestens eine Gleitstein im Unterteil der Siegelstation versenkbar gelagert ist. Dies ermöglicht es, dass die Siegelbrille bei einem genügend hohen Anpressdruck mit dem Unterteil der Siegelstation auf Block kommt, was dann eine weitere Verlagerung der Siegelbrille erschwert oder verhindert.

Vorteilhaft ist es weiterhin, wenn der mindestens eine Gleitstein in einer Führung im Unterteil gelagert ist, um auf diese Weise ein Verkanten des Gleitsteins relativ zum Unterteil der Siegelstation zu verhindern.

Vorzugsweise weist die Siegelstation einen Anschlag auf, ggf. auch mehrere Anschläge, um ein Ausmaß der Verlagerung der Siegelbrille in einer oder zwei Richtungen zu begrenzen. Auf diese Weise kann sichergestellt werden, dass sich die Siegelbrille lediglich innerhalb eines bestimmten Raumbereichs verlagert. Dies wiederum ist vorteilhaft, um sicherzustellen, dass die Siegelbrille auch bei nachfolgenden Arbeitstakten bereits einigermaßen genau zu den Mulden in der Unterfolie ausgerichtet ist.

Denkbar ist es, dass die Siegelbrille auf mindestens einen nach oben aus dem Unterteil hervorstehenden Bolzen aufgesetzt ist, insbesondere lose aufgesetzt ist. In diesem Fall kann der Kontakt zwischen der Siegelbrille und dem Bolzen in Horizontalrichtung eine Möglichkeit zum Realisieren des vorstehend angesprochenen Anschlags darstellen.

Konkret könnte der Bolzen mit Spiel in einer Öffnung der Siegelbrille oder in einer Öffnung im Unterteil aufgenommen sein, so dass beim Aufbrauchen dieses Spiels der besagte Anschlag stattfindet.

Im Folgenden wird ein vorteilhaftes Ausführungsbeispiels der Erfindung anhand einer Zeichnung näher erläutert. Im Einzelnen zeigen:
- Figur 1: eine schematische Ansicht einer erfindungsgemäßen Tiefziehverpackungsmaschine,
- Figur 2: eine perspektivische Ansicht eines Teils des Siegelstation-Unterteils mit der Siegelbrille,
- Figur 3: eine perspektivische Ansicht entsprechend Fig. 2, allerdings ohne die Siegelbrille,
- Figur 4: einen Vertikalschnitt durch Komponenten der Siegelstation, an der in Fig. 2 mit V-V bezeichneten Stelle,
- Figur 5: einen Vertikalschnitt durch Komponenten der Siegelstation,
- Figur 6: eine Ausschnittsvergrößerung aus Fig. 5, und
- Figur 7: eine schematische Zeichnung des Funktionsprinzips.

Einander entsprechende Komponenten sind in den Figuren durchgängig mit gleichem Bezugszeichen versehen.

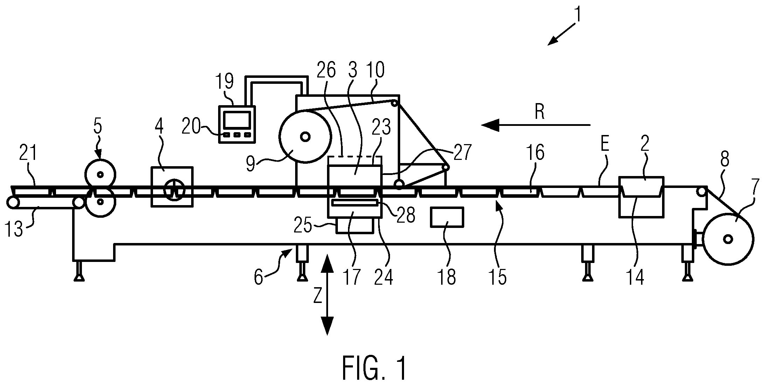

Figur 1 zeigt in schematischer Ansicht eine erfindungsgemäße Verpackungsmaschine in Form einer Tiefziehverpackungsmaschine 1. Die Tiefziehverpackungsmaschine 1 weist eine Formstation 2, eine Siegelstation 3, eine Querschneidestation 4 und eine Längsschneidestation 5 auf, die in dieser Reihenfolge in eine Arbeitsrichtung oder Transportrichtung R an einem Maschinengestell 6 angeordnet sind. Eingangsseitig befindet sich an dem Maschinengestell 6 eine Zufuhrrolle 7, von der eine Unterfolie 8 abgezogen wird. Im Bereich der Siegelstation 3 ist ein Materialspeicher 9 vorgesehen, von dem eine Oberfolie 10 abgezogen wird. Ausgangsseitig ist an der Verpackungsmaschine eine Abfuhreinrichtung 13 in Form eines Transportbandes vorgesehen, mit der fertige, vereinzelte Verpackungen 21 abtransportiert werden. Ferner weist die Verpackungsmaschine 1 eine nicht dargestellte Vorschubeinrichtung auf, die die Unterfolie 8 ergreift und in einem Hauptarbeitstakt taktweise in der Arbeitsrichtung R weitertransportiert. Die Vorschubeinrichtung kann zum Beispiel durch seitlich angeordnete Transportketten realisiert sein und die Unterfolie 8 in einer Transportebene E transportieren.

In der dargestellten Ausführungsform ist die Formstation 2 als eine Tiefziehstation ausgebildet, in der in der Unterfolie 8 durch Tiefziehen Mulden 14 geformt werden. Dabei kann die Formstation 2 derart ausgebildet sein, dass in der Richtung senkrecht zur Transportrichtung R mehrere Mulden nebeneinander gebildet werden. In Transportrichtung R hinter der Formstation 2 ist eine Einlegestrecke 15 vorgesehen, in der die in der Unterfolie 8 geformten Mulden 14 mit Produkten 16 befüllt werden.

Die Siegelstation 3 verfügt über eine verschließbare Kammer 17, in der die Atmosphäre in der Mulde 14 vor dem Versiegeln zum Beispiel durch Gasspülen mit einem Austauschgas oder mit einem Austausch-Gasgemisch ersetzt werden kann.

Die Querschneidestation 4 ist als Streifenstanze ausgebildet, die die Unterfolie 8 und die Oberfolie 10 in einer Richtung quer zur Arbeitsrichtung R zwischen benachbarten Mulden 14 durchtrennt. Dabei arbeitet die Querschneidestation 4 derart, dass die Unterfolie 8 nicht über die gesamte Breite aufgetrennt wird, sondern zumindest in einem Randbereich und zwischen zwei benachbarten Mulden 14 nicht durchtrennt wird. Dies ermöglicht einen kontrollierten Weitertransport der Mulden 14 durch die Vorschubeinrichtung.

Die Längsschneidestation 5 ist in der dargestellten Ausführungsform als eine Messeranordnung ausgebildet, mit der die Unterfolie 8 und die Oberfolie 10 zwischen benachbarten Mulden 14 und am seitlichen Rand der Unterfolie 8 durchtrennt werden, so dass hinter der Längsschneidestation 5 vereinzelte Verpackungen 21 vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Tiefziehverpackungsmaschine 1 für bzw. durch einen Bediener.

Die generelle Arbeitsweise der Verpackungsmaschine 1 wird im Folgenden kurz dargestellt.

Die Unterfolie 8 wird von der Zufuhrrolle 7 abgezogen und durch die Vorschubeinrichtung in die Formstation 2 transportiert. In der Formstation 2 werden durch Tiefziehen Mulden 14 in die Unterfolie 8 gebildet. Die Mulden 14 werden zusammen mit dem umgebenden Bereich der Unterfolie 8 in einem Hauptarbeitstakt zu der Einlegestrecke 15 weitertransportiert, in der sie mit Produkt 16 befüllt werden.

Anschließend werden die befüllten Mulden 14 zusammen mit dem sie umgebenden Bereich der Unterfolie 8 in dem Hauptarbeitstakt durch die Vorschubeinrichtung in Transportrichtung R in die Siegelstation 3 weitertransportiert. Die Oberfolie 10 wird nach einem Ansiegelvorgang an die Unterfolie 8 mit der Vorschubbewegung der Unterfolie 8 weitertransportiert. Dabei wird die Oberfolie 10 von dem Materialspeicher 9 abgezogen. Durch das Ansiegeln der Oberfolie 10 an die Mulden 14 entstehen verschlossene Verpackungen 21.

Die Siegelstation 3 verfügt über ein Oberwerkzeug bzw. Oberteil 23 und ein Unterwerkzeug bzw. Unterteil 24. Mindestens eines dieser Ober- und Unterteile 23, 24 ist mittels einer Hubeinrichtung 25 in einer Schließrichtung Z beweglich, die senkrecht zur Transportrichtung R steht und vorzugsweise vertikal sein kann. Konkret ist das oder sind die beweglichen Ober- bzw. Unterteil 23, 24 in Schließrichtung Z derart relativ zum anderen Ober-/Unterteil 23, 24 beweglich, dass sie zwischen einer in Fig. 1 mit gestrichelten Linien angedeuteten, geöffneten Stellung 26 und einer mit durchgezogenen Linien gezeigten, geschlossenen Stellung 27 bewegbar sind, wobei die Ober- und Unterteile 23, 24 in der geschlossenen Stellung 27 zwischen sich die hermetisch geschlossene Kammer 17 bilden.

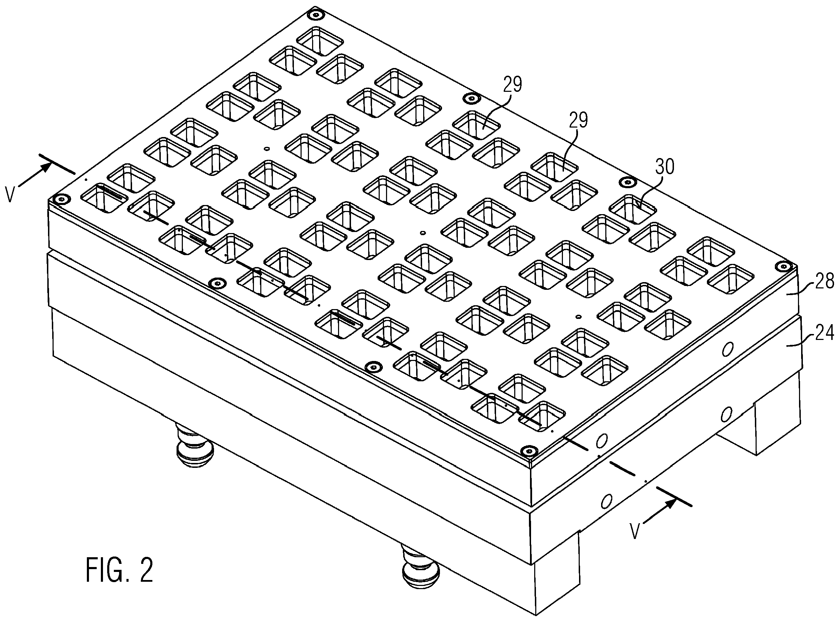

Innerhalb der Unterteils 24 der Siegelstation 3 ist eine Siegelbrille 28 angeordnet. Fig. 2 zeigt die Siegelbrille 28 über einem Teil der Komponenten des Unterteils 24 der Siegelstation 3. Im dargestellten Ausführungsbeispiel ist die Siegelbrille 28 plattenförmig konfiguriert. Sie kann zur Aufnahme einer oder mehrerer Mulden 14 eine oder mehrere Öffnungen 29 aufweisen, die in Form von Durchgangsöffnungen oder von Vertiefungen in der Siegelbrille 28 ausgebildet sein können. Die Zahl und die Anordnung der Öffnungen 29 in der Siegelbrille 28 sollte an die Zahl und die räumliche Verteilung der in der Formstation 2 erzeugten Mulden 14 in der Unterfolie 8 angepasst sein. Im Ausführungsbeispiel nach Fig. 2 weist die Siegelbrille 28 insgesamt 72 solcher Öffnungen 29 auf. Jede Öffnung 29 hat hier einen umlaufenden Rand 30.

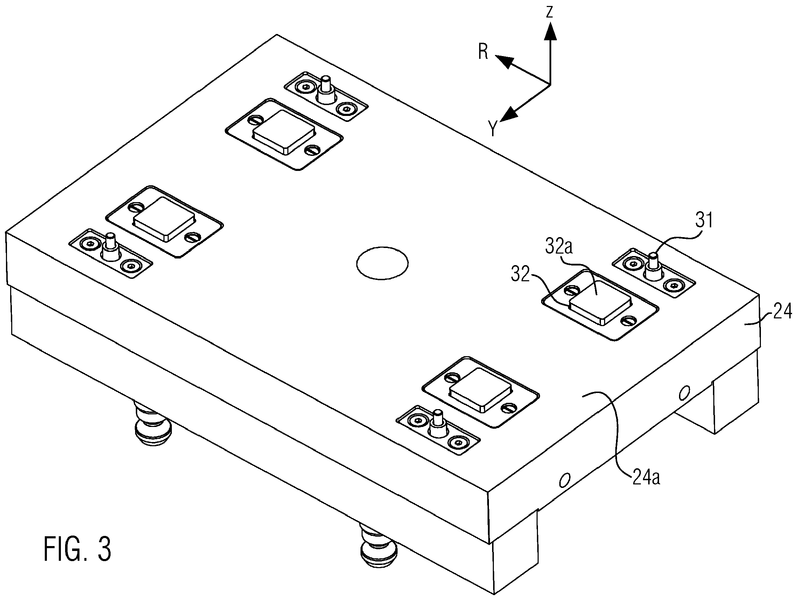

Fig. 3 zeigt dieselbe perspektivische Ansicht wie Fig. 2, allerdings ohne die Siegelbrille 28. Von einer Oberseite 24a, die zum Unterteil 24 gehört, stehen Bolzen 31 nach oben hervor. Im vorliegenden Ausführungsbeispiel gibt es vier solcher Bolzen 331. Auf diese Stifte oder Bolzen 31 kann die Siegelbrille 28 lose, d. h. mit Spiel, in einer oder zwei der Richtungen R, Y (d. h. jeweils senkrecht zur Schließrichtung Z) aufgesetzt werden.

Im Unterteil 24 sind ferner ein oder mehrere (im vorliegenden Ausführungsbeispiel: vier) Gleitelemente oder Gleitsteine 32 angeordnet. Im vorliegenden Ausführungsbeispiel sind die Gleitsteine 32 jeweils federnd im Unterteil 24 gelagert. Sie ragen in der in Fig. 3 gezeigten Stellung mit ihrer Oberseite 32a über die Oberseite 24a des Unterteils 24 hinaus. Die Oberfläche 32a der Gleitsteine 32 ist hier eben; auf den Oberflächen 32a der Gleitsteine 32 liegt die Siegelbrille 28 lose, d. h. verschiebbar, auf.

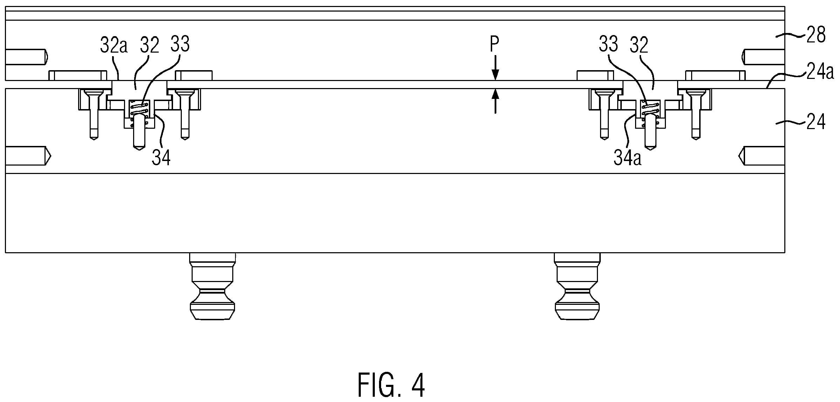

Fig. 4 zeigt einen Vertikalschnitt durch das Unterteil 24 der Siegelstation 3. Zu erkennen ist hier, dass die Gleitsteine 32 jeweils mittels einer schraubenförmigen Druckfeder 33, die die Gleitsteine 32 nach oben vorspannt, im Unterteil 24 gelagert sind. Beim Ausüben einer genügend hohen Kraft von oben auf die Siegelbrille 28 verlagern sich die Gleitsteine 32 nach unten, bis ihre Oberfläche 32a flächenbündig ist mit der Oberseite 24a des Unterteils 24. Für jeden Gleitstein 32 ist eine Führung 34 im Unterteil 24 vorgesehen, um bei der Bewegung des Gleitsteins 32 ein Verkanten zu verhindern.

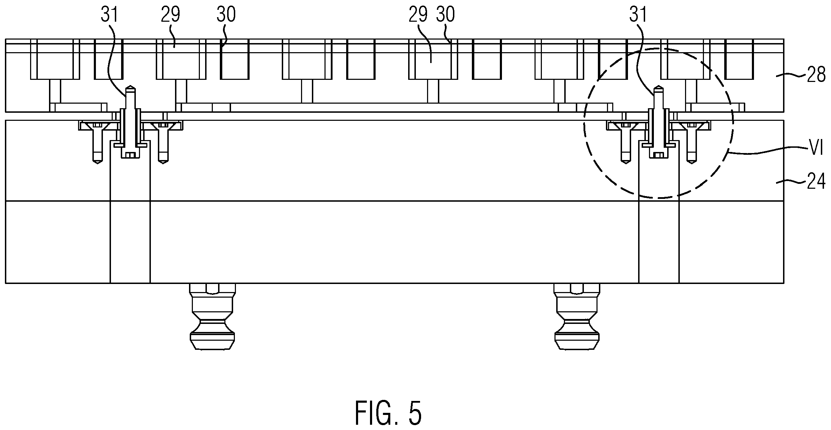

Fig. 5 zeigt einen Vertikalschnitt durch das Unterteil 24 und die Siegelbrille 28 an der in Fig. 2 mit V-V bezeichneten Stelle. Zu erkennen sind die hier als Vertiefung gestalteten Öffnungen 29 mit ihren Rändern 30 in der Siegelbrille 28. Zu erkennen ist auch, wie die Siegelbrille 28 auf die aus dem Unterteil 24 nach oben herausragenden Bolzen 31 aufgesetzt ist, wofür entsprechende Aussparungen in der Unterseite der Siegelbrille 28 vorgesehen sind.

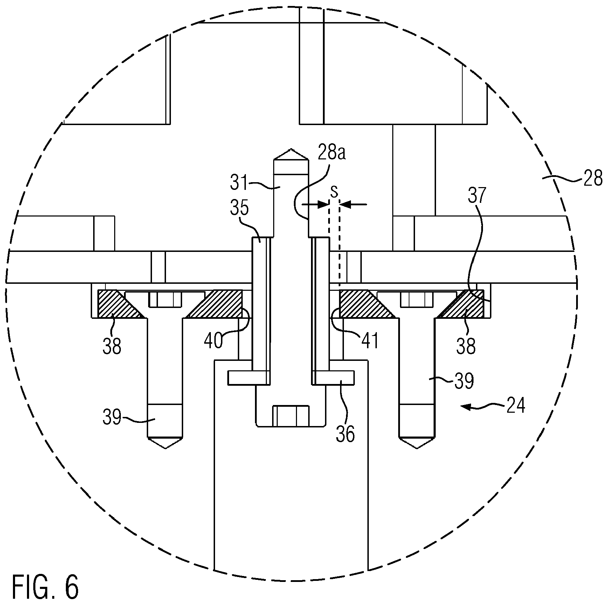

Fig. 6 zeigt in Vergrößerung den in Fig. 5 mit VI bezeichneten Ausschnitt. Der Bolzen 31 ist hier als Schraube ausgebildet und - von einer Buchse 35 umgeben - in eine Aussparung 28a in der Siegelbrille 28 eingeschraubt. Die Buchse 35 umfasst einen Kragen 36. In eine Vertiefung 37 im Unterteil 24 der Siegelstation 3 ist eine Platte 38 eingelegt und dort mit Senkschrauben 39 befestigt. Die Platte 38 weist eine Öffnung 40 auf, durch die sich der Bolzen 31 und seine Buchse 35 mit einem Spiel S hindurch erstrecken. Das Spiel S bestimmt, um welchen maximalen Weg sich die Siegelbrille 28 in horizontaler Richtung relativ zum Unterteil 24 verlagern kann. Der Rand der Öffnung 40 stellt somit einen Anschlag 41 für die horizontale Bewegung der Siegelbrille 28 dar. Der Kragen 36 der Buchse 35 sichert die Siegelbrille 28 zusätzlich gegen ein Abheben nach oben vom Unterteil 24.

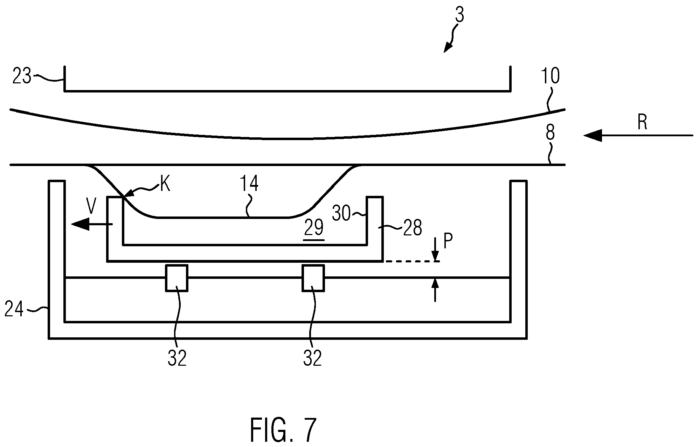

Fig. 7 zeigt schematisch, wie sich die schwimmende Lagerung der Siegelbrille 28 im Unterteil 24 im Betrieb der Tiefziehverpackungsmaschine 1 auswirkt. Nachdem die Unterfolie 8 mit der mindestens einen Mulde 14 in Transportrichtung R in die Siegelstation hineintransportiert wurde, wird die Siegelstation 3 von ihrer hier dargestellten, geöffneten Stellung 26 in ihre geschlossene Stellung 27 gebracht. Zu diesem Zweck werden Oberteil 23 und Unterteil 24 relativ zueinander bewegt, vorzugsweise durch Anheben des Unterteils 24 mit Schließrichtung Z nach oben. Zumindest in einer ersten Phase der Schließbewegung liegt die Siegelbrille 28 lose auf den Gleitsteinen 32 auf. Die Siegelbrille 28 wird sich also in seitlicher Richtung R, Y verlagern, sobald sie in einer dieser Richtungen eine Kraft erfährt, die größer ist als die Gleitreibung zwischen der Siegelbrille 28 und den Gleitsteinen 32. Diese Kraft entsteht durch den Kontakt an der Stelle K zwischen der Mulde 14 und dem Rand 30 der Öffnung 29 in der Siegelbrille 28.

Folglich erfährt die Siegelbrille 28 eine Verlagerung V (hier: in Richtung R nach links), wenn das Unterteil 24 und mit ihm die Siegelbrille 28 weiter angehoben werden. Diese Verlagerung V setzt sich fort, bis die Siegelbrille 28 am Rand der Mulden 14 anliegt. Eine nun von oben auf die Siegelbrille 28 ausgeübte Kraft, beispielsweise durch das Oberteil 23, führt zu einem Verdrängen der federnd gelagerten Gleitsteine 32 in das Unterteil 24 hinein, bis der Spalt P zwischen Unterteil 24 und Siegelbrille 28 (siehe auch Fig. 4) geschlossen wird und die Siegelbrille 28 auf Block liegt mit dem Unterteil 24. Ab diesem Zeitpunkt wird sich die Siegelbrille 28 nicht mehr seitlich verlagern. Sie kann jetzt die durch ein von oben herunterfahrendes Siegelwerkzeug einwirkenden Kräfte aufnehmen.

Die erfindungsgemäße Verlagerung der Siegelbrille 28 wird umso besser funktionieren, je kleiner die Massenträgheit der Siegelbrille 28, je langsamer die Schließbewegung der Siegelstation 3 und je geringer die Reibung zwischen der Siegelbrille 28 und dem Unterteil 24 der Siegelstation 3 gestaltet wird, und je stärker (härter) die Unterfolie 8 gewählt wird.

Ausgehend von dem dargestellten Ausführungsbeispiel kann die Erfindung in vielfacher Weise ergänzt oder abgewandelt werden. So wurde bereits darauf hingewiesen, dass beispielsweise die Anzahl und die Verteilung der Öffnungen 29 in der Siegelbrille 28 weitgehend frei wählbar ist. Maßnahmen zur Verringerung der Gleitreibung zwischen Siegelbrille 28 und Unterteil 24 können es ermöglichen, prinzipiell auch dünnere Verpackungsfolien einzusetzen.

## Patentansprüche

1. Verfahren zum Betreiben einer Tiefziehverpackungsmaschine (1), wobei die Tiefziehverpackungsmaschine (1) eine Formstation (2) zum Tiefziehen von Mulden (14) in eine Unterfolie (8) sowie eine Siegelstation (3) zum Versiegeln der Mulden (14) mit einer Oberfolie (10) aufweist,
wobei die Siegelstation (3) ein Oberteil (23) und ein Unterteil (24) aufweist, von denen mindestens eines relativ zum anderen zwischen einer geöffneten Stellung (26) und einer geschlossenen Stellung (27) bewegbar ist, und wobei die Siegelstation (3) innerhalb des Unterteils (24) eine Siegelbrille (28) mit einer oder mehreren Öffnungen (29) zur Aufnahme einer entsprechenden Anzahl von Mulden (14) umfasst,
wobei das Verfahren folgende Schritte aufweist:
Tiefziehen von Mulden (14) in der Formstation (2),
Transportieren der geformten Mulden (14) in einer Transportrichtung (R) von der Formstation (2) zur Siegelstation (3),
Schließen der Siegelstation (3) durch Bewegen des Oberteils (23) und/oder des Unterteils (24) der Siegelstation (3) in einer zur Transportrichtung (R) senkrechten Schließrichtung (Z) von der geöffneten Stellung (26) zur geschlossenen Stellung (27),
**dadurch gekennzeichnet, dass** sich die Siegelbrille (28) während des Schließens der Siegelstation (3) durch Verlagern relativ zum Unterteil (23) in Transportrichtung (R) und/oder in einer sowohl senkrecht zur Transportrichtung (R) als auch senkrecht zur Schließrichtung (Z) stehenden Richtung (Y) an der oder den in die Siegelstation (3) eingebrachten Mulden (14) ausrichtet.

2. Verfahren nach Anspruch 1, **dadurch gekennzeichnet, dass** die Siegelbrille (28) sich durch einen Kontakt eines Rands (30) der Öffnung (29) mit der wenigstens einen Mulde (14) ausrichtet.

3. Verfahren nach einem der vorangehenden Ansprüche, **dadurch gekennzeichnet, dass** die Unterfolie (8) eine Stärke von 150µm oder mehr aufweist.

4. Verfahren nach einem der vorangehenden Ansprüche, **dadurch gekennzeichnet, dass** die Siegelbrille (28) und das Unterteil (23) der Siegelstation (3) nach einem Teil der Schließbewegung der Siegelstation (3) auf Block liegen.

5. Verfahren nach einem der vorangehenden Ansprüche, **dadurch gekennzeichnet, dass** die Siegelbrille (28) nach einem Teil der Schließbewegung der Siegelstation (3) relativ zum Unterteil (24) der Siegelstation (3) ihre Position in Transportrichtung (R) und in Richtung (Y) beibehält.

6. Tiefziehverpackungsmaschine (1), insbesondere zum Durchführen eines Verfahrens nach einem der vorangehenden Ansprüche, wobei die Tiefziehverpackungsmaschine (1) eine Formstation (2) zum Tiefziehen von Mulden (14) in eine Unterfolie (8) sowie eine Siegelstation (3) zum Versiegeln der Mulden (14) mit einer Oberfolie (10) aufweist, wobei die Siegelstation (3) ein Oberteil (23) und ein Unterteil (24) aufweist, von denen mindestens eines relativ zum anderen zwischen einer geöffneten Stellung (26) und einer geschlossenen Stellung (27) bewegbar ist, und wobei die Siegelstation (3) innerhalb des Unterteils (24) eine Siegelbrille (28) mit einer oder mehreren Öffnungen (29) zur Aufnahme einer entsprechenden Anzahl von Mulden (14) umfasst, **dadurch gekennzeichnet, dass** die Siegelbrille (28) innerhalb des Unterteils (24) der Siegelstation (3) schwimmend gelagert ist und zumindest zeitweise während des Schließens der Siegelstation (3) relativ zum Unterteil (24) verlagerbar ist.

7. Tiefziehverpackungsmaschine nach Anspruch 6, **dadurch gekennzeichnet, dass** die Siegelbrille (28) relativ zum Unterteil (24) der Siegelstation (3) in einer oder zwei Richtungen (R, Y) verlagerbar ist, die jeweils senkrecht zu einer Schließrichtung (Z) der Siegelstation (3) oder horizontal ausgerichtet sind.

8. Tiefziehverpackungsmaschine nach einem der Ansprüche 6 oder 7, **dadurch gekennzeichnet, dass** die Siegelbrille (28) auf mindestens einem im Unterteil (24) der Siegelstation (3) angeordneten oder gelagerten Gleitstein (32) aufliegt.

9. Tiefziehverpackungsmaschine nach Anspruch 8, **dadurch gekennzeichnet, dass** der mindestens eine Gleitstein (32) federnd im Unterteil (24) gelagert ist.

10. Tiefziehverpackungsmaschine nach einem der Ansprüche 8 oder 9, **dadurch gekennzeichnet, dass** der mindestens eine Gleitstein (32) im Unterteil (24) versenkbar gelagert ist.

11. Tiefziehverpackungsmaschine nach einem der Ansprüche 8 bis 10, **dadurch gekennzeichnet, dass** der mindestens eine Gleitstein (32) in einer Führung (34) im Unterteil (24) gelagert ist.

12. Tiefziehverpackungsmaschine nach einem der Ansprüche 6 bis 11, **dadurch gekennzeichnet, dass** die Siegelstation (3) einen Anschlag (41) aufweist, um ein Ausmaß der Verlagerung der Siegelbrille (28) in einer oder zwei Richtungen (R, Y) zu begrenzen.

13. Tiefziehverpackungsmaschine nach einem der Ansprüche 6 bis 12, **dadurch gekennzeichnet, dass** die Siegelbrille (28) auf mindestens einen nach oben aus dem Unterteil (24) hervorstehenden Bolzen (31) aufgesetzt ist.

14. Tiefziehverpackungsmaschine nach Anspruch 13, **dadurch gekennzeichnet, dass** der Bolzen (31) mit Spiel (S) in einer Öffnung (40) in der Siegelbrille (28) oder im Unterteil (24) aufgenommen ist.
